# EUROPEAN PATENT APPLICATION

(11) **EP 4 557 028 A1**
(43) Date of publication of application: **21.05.2025**
(21) Application number: 24213646.3
(22) Date of filing: 18.11.2024
(51) Int. Cl.: G05B 19/409, G05B 19/418

(54) **OPERATION STATE MANAGEMENT SYSTEM**

(30) Priority: 20.11.2023 JP 2023196950
(71) Applicant: The Japan Steel Works, Ltd., Tokyo 141-0032 (JP)
(72) Inventor: HANAYAMA, Kazuhiro, Tokyo 1410032 (JP)
(74) Representative: Simmons & Simmons LLP (Munich)

(57) **Abstract**

An operation state management system includes one or a plurality of servers configured to manage operation states of a plurality of industrial machines, and one or a plurality of terminals configured to communicate with the server. Information on the operation states of the plurality of industrial machines is periodically transmitted to the server and stored. The server includes an operation state management screen displayed on the terminal in response to a call from the terminal. A plurality of cards corresponding to each of the plurality of industrial machines are displayed on the operation state management screen, and each of the cards displays an industrial machine identification name, an operation rate, and a current operation state of the corresponding industrial machine.

## Description

### TECHNICAL FIELD

The present disclosure relates to an operation state management system for managing operation states of a plurality of industrial machines such as injection molding machines installed in a factory.

### BACKGROUND

A plurality of industrial machines such as injection molding machines are installed in a factory, and each machine is operated by a controller provided therein. For these industrial machines, various screens prepared in an industrial machine are displayed on a monitor provided in the controller, so that the operation states can be checked, or measurement data measured by various sensors can be viewed.

JP2015-116757A describes an injection molding machine that can be operated from a network terminal. A controller of the injection molding machine includes a Web server function and a screen application. When the injection molding machine is accessed from a terminal such as a PC connected to the network, an operation screen is displayed, so that an operation state of the injection molding machine can be checked, and measurement data and the like can be viewed.

### SUMMARY

As in the injection molding machine described in JP2015-116757A, when an operation screen of an injection molding machine is displayed on a terminal connected to the network, the injection molding machine can be conveniently managed from a remote location. If operation screens for an industrial machine other than the injection molding machine can be similarly called up via a network connection, remote management can be made possible, resulting in high efficiency. However, there is also a problem to be solved. By calling up the operation screen of each industrial machine on a PC connected to the network, the operation state and the like of each machine can be viewed in sequence. However, it is difficult to efficiently check and manage the operation states of a plurality of industrial machines installed in the factory.

Illustrative aspects of the present disclosure provide an operation state management system that efficiently manages operation states and the like of a plurality of industrial machines installed in a factory.

Other problems and novel features will become apparent from description of the present description and the accompanying drawings.

One illustrative aspect of the present disclosure provides an operation state management system including: one or a plurality of servers configured to manage operation states of a plurality of industrial machines; and one or a plurality of terminals configured to communicate with the server. Information on the operation states of the plurality of industrial machines is periodically transmitted to the server and stored. The server includes an operation state management screen displayed on the terminal in response to a call from the terminal. A plurality of cards corresponding to each of the plurality of industrial machines are displayed on the operation state management screen, and each of the cards displays an industrial machine identification name, an operation rate, and a current operation state of the corresponding industrial machine.

According to the present disclosure, an operation state management screen makes it possible to efficiently check operation states and the like of a plurality of industrial machines.

### BRIEF DESCRIPTION OF DRAWINGS

FIG. 1 is a network diagram showing an operation state management system according to the present illustrative embodiment and industrial machines such as injection molding machines.
FIG. 2 is a front view of an injection molding machine according to the present illustrative embodiment to be managed by the operation state management system according to the present illustrative embodiment.
FIG. 3 is an operation state management screen according to the present illustrative embodiment included in the operation state management system according to the present illustrative embodiment.
FIG. 4A is an injection molding machine screen according to the present illustrative embodiment included in the operation state management system according to the present illustrative embodiment.
FIG. 4B is an injection molding machine screen according to the present illustrative embodiment included in the operation state management system according to the present illustrative embodiment.
FIG. 4C is an injection molding machine screen according to the present illustrative embodiment included in the operation state management system according to the present illustrative embodiment.
FIG. 5A is a work input screen according to the present illustrative embodiment included in the operation state management system according to the present illustrative embodiment.
FIG. 5B is a work input screen according to the present illustrative embodiment included in the operation state management system according to the present illustrative embodiment.
FIG. 5C is a work input screen according to the present illustrative embodiment included in the operation state management system according to the present illustrative embodiment.
FIG. 6 is a work report screen according to the present illustrative embodiment included in the operation state management system according to the present illustrative embodiment.
FIG. 7 is an operation state management screen according to a modification of the present illustrative embodiment.

### DETAILED DESCRIPTION

Hereinafter, specific illustrative embodiments will be described in detail with reference to the drawings. The present disclosure is not limited to the following illustrative embodiments. In order to clarify the description, the following description and the drawings are simplified as appropriate. In the drawings, the same elements are denoted by the same reference numerals, and repeated description thereof is omitted as necessary. In addition, hatching may be omitted to avoid complicating the drawings.

### {Operation State Management System}

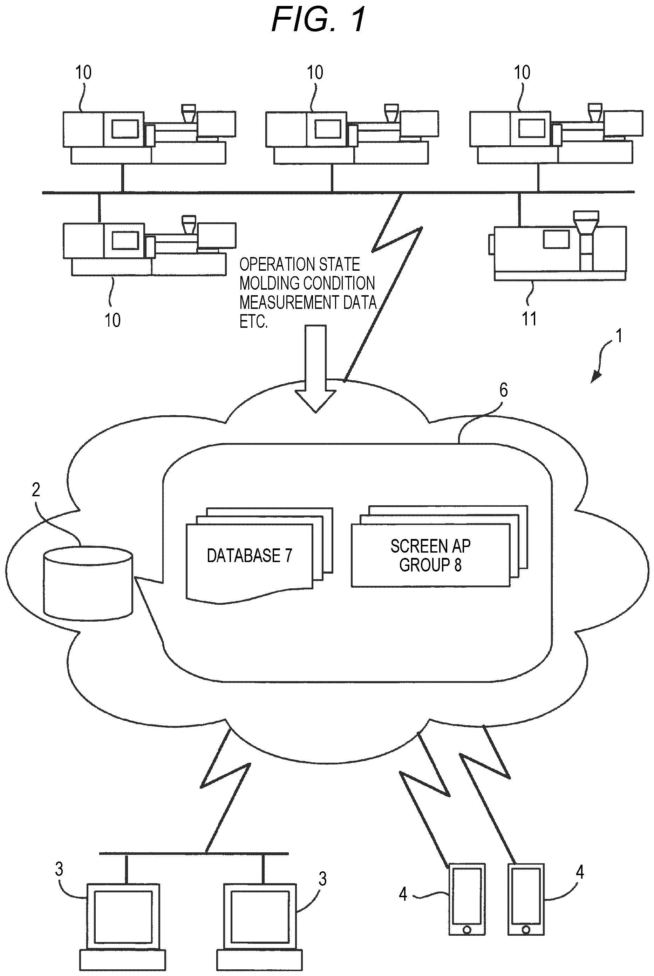

As shown in FIG. 1, a factory includes a plurality of industrial machines 10, 11, ... such as injection molding machines 10, 10, ... and an extruder 11. An operation state management system 1 according to the present illustrative embodiment is configured to manage operation states of the plurality of industrial machines 10, 11, ... The operation state management system 1 includes a server 2 provided on a network, and one or more terminals 3, 3, 4, ... that communicate with the server 2. The server 2 is shown as being a single computer in FIG. 1, but may include two or more computers. As the terminals 3, 4, ..., not only personal computers 3, 3 but also mobile terminals 4, 4 such as smartphones may be adopted.

The server 2 includes processing software 6 that performs processing of the operation state management system 1 according to the present illustrative embodiment. The processing software 6 may be constructed by introducing a commercially available business management cloud, such as a Salesforce (registered trademark) and Kintone (registered trademark), or may be constructed without introducing a business management cloud. The processing software 6 includes a database 7, a set of screen applications 8, so-called as 'screen AP group', which are to be provided to the terminals 3 and 4, and the like. Current operation states of the industrial machines 10 and 11 are periodically transmitted to the processing software 6 and stored in the database 7. In the case of the injection molding machines 10, 10, various types of data such as molding conditions and measurement data are also periodically transmitted and stored in the database 7.

### {Injection Molding Machine}

The operation state management system 1 according to the present illustrative embodiment manages various types of industrial machines 10, 11, ... For the injection molding machines 10, 10, not only the operation states are managed, but also various data such as measurement data and setting data are managed in detail. That is, the operation state management system 1 according to the present illustrative embodiment can manage the injection molding machines 10, 10, ... installed in a factory in greater detail. The injection molding machine 10 to be managed will be schematically described.

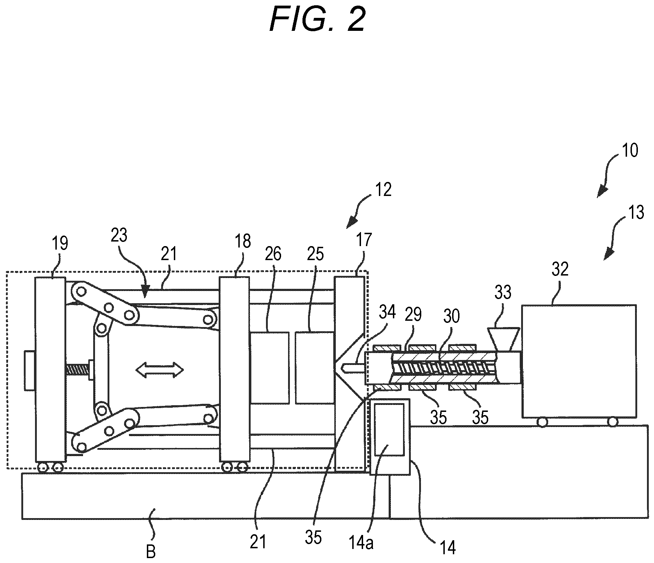

As shown in FIG. 2, the injection molding machine 10 according to the present illustrative embodiment includes a mold clamping device 12 and an injection device 13. The injection molding machine 10 includes a controller 14, which is configured to control the mold clamping device 12 and the injection device 13. The controller 14 includes a monitor 14a on which various screens are displayed. On the monitor 14a, a molding condition can be set, and measurement data or the like, which is measured by a sensor provided in the injection molding machine 10, can be viewed. As will be described later, the monitor 14a is also configured to display a work report screen 95 provided by the operation state management system 1 according to the present illustrative embodiment.

### {Mold Clamping Device}

The mold clamping device 12 includes a fixed platen 17 fixed to a bed B, a movable platen 18 provided on the bed B in a slidable manner, and a mold clamping housing 19. The fixed platen 17 and the mold clamping housing 19 are coupled to each other by a plurality of tie bars 21, 21, ... The movable platen 18 is slidable between the fixed platen 17 and the mold clamping housing 19. A mold clamping mechanism, that is, a toggle mechanism 23 in the present illustrative embodiment is provided between the mold clamping housing 19 and the movable platen 18. The fixed platen 17 and the movable platen 18 are provided with a fixed side mold 25 and a movable side mold 26, respectively. Accordingly, when the toggle mechanism 23 is driven, the molds 25 and 26 are opened and closed.

### {Injection Device}

The injection device 13 includes a heating cylinder 29, a screw 30 provided in the heating cylinder 29, and a screw driving device 32. The heating cylinder 29 is supported by the screw driving device 32. The screw 30 is configured to be driven in a rotation direction and an axial direction by the screw driving device 32. The heating cylinder 29 includes a hopper 33 and an injection nozzle 34. The heating cylinder 29 is provided with a plurality of heaters 35, 35, ...

The injection device 13 is moved forward to bring the injection nozzle 34 into contact with the fixed side mold 25. In response to an instruction from the controller 14, electric power is supplied to the heaters 35, 35, ... to heat the heating cylinder 29, and an injection material is supplied from the hopper 33 to rotate the screw 30. Then, the injection material is melted and sent to a tip end of the screw 30. That is, the injection material is metered. After the injection material is metered, in response to an instruction from the controller 14, the screw driving device 32 is controlled to drive the screw 30 in the axial direction. Then, the injection material is pushed forward along with forward movement of the screw 30. That is, the injection material is injected into the molds 25 and 26.

### {Operation State Management Screen}

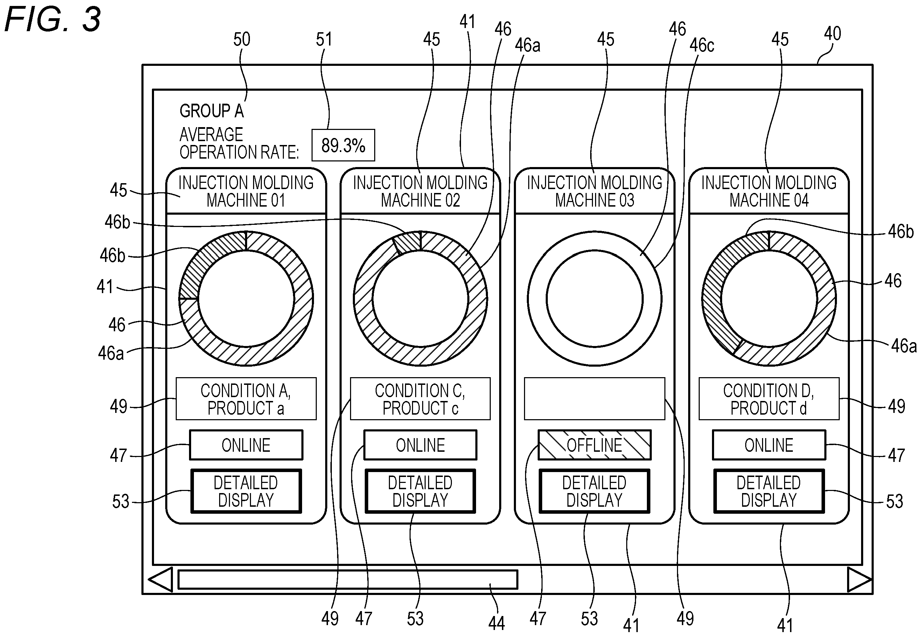

The screen AP group 8 included in the processing software 6 of the operation state management system 1 (see FIG. 1) according to the present illustrative embodiment will be described. The most characteristic screen in the present illustrative embodiment is an operation state management screen 40 shown in FIG. 3. The operation state management screen 40 is included in the screen AP group 8, and can be called up and displayed on the terminals 3, 4, ... by an operation from the terminals 3, 4, ... As described in detail below, the operation state management screen 40 is designed to display operation states and the like of a plurality of industrial machines 10, 11, ... installed in a factory, based on data stored in the database 7.

On the operation state management screen 40, a group name 50 is displayed at the top. The group name 50 may be the name of a factory, or may be the name of each group that the injection molding machines 10, 10, ... (see FIG. 1) in a factory are divided into. Hereinafter, for ease of explanation, it is assumed that "group A" indicates the name of the factory. Below the group name 50, an average operation rate display field 51 indicating an average operation rate is displayed. In FIG. 3, the average operation rate displayed represents an average operation rate of all the injection molding machines 10, 10, ... within group A, that is, within the factory.

A plurality of cards 41, 41, ... are displayed on the operation state management screen 40. Each card 41 corresponds to a single injection molding machine 10. The number of cards 41, 41, ... displayed is equal to the number of the injection molding machines 10, 10, ... installed in the factory. In a case where there are too many cards 41, 41, ... to display all at once, the cards 41, 41, ... corresponding to the desired injection molding machines 10, 10, ... can be displayed through operation of a slide bar 44.

In the present illustrative embodiment, the cards 41, 41, ... manage the operation states of the injection molding machines 10, 10, ... and can therefore be called injection molding machine cards 41, 41, ... At the top of the injection molding machine cards 41, 41, ..., industrial machine identification names 45, 45, ... for identifying the injection molding machines 10, 10, ... (see FIG. 1) are displayed. For example, "injection molding machine 01" and "injection molding machine 02" and the like.

Next, on the injection molding machine cards 41, 41, ..., pie charts 46, 46, ... indicating operating ratios of the injection molding machines 10, 10, ... are displayed. The pie charts 46, 46, ... show a cumulative operation time 46a, a downtime 46b, and a stop time 46c from an operation start date, with sizes corresponding to the respective proportions. Instead of being cumulative from the operation start date, the operation time 46a, the downtime 46b, and the stop time 46c within the current year, month, or day may be displayed. Since the operating ratios of the injection molding machines 10, 10, ... can be read based on the pie charts 46, 46, ... respectively, even if there are a large number of injection molding machines 10, 10, ..., the states thereof can be easily managed.

The injection molding machine cards 41, 41, ... also includes operation state display fields 47, 47, ... each indicating a current operation state. If the injection molding machines 10, 10, ... (see FIG. 1) are in operation or at rest, "online" is displayed, and if the injection molding machines 10, 10, ... are stopped, "offline" is displayed.

A molding condition identification name for identifying a molding condition currently set in each of the injection molding machines 10, 10, ... is displayed on the injection molding machine cards 41, 41, ... The molding condition identification name is displayed in molding condition identification name display fields 49, 49, ... Further, detailed display buttons 53, 53, ... are provided, and in a case where any of them is selected, an injection molding machine screen 60, which will be described next, is displayed, and detailed information about the corresponding injection molding machines 10, 10, ... is displayed.

### {Injection Molding Machine Screen}

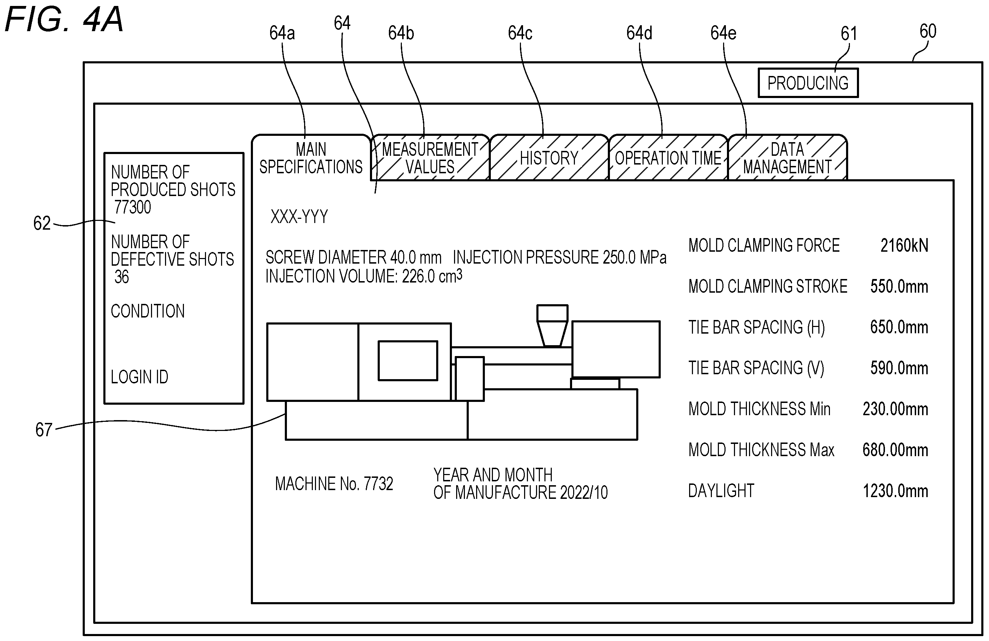

As shown in FIG. 4A, the injection molding machine screen 60 is designed to display detailed information of one injection molding machine 10 (see FIG. 1). The injection molding machine screen 60 is configured such that data to be displayed can be changed by selecting a predetermined display mode from a plurality of types of display modes as described below. However, there is data that is always displayed regardless of the display mode. As data that is always displayed, first, there is an operation state display field 61 displayed at the top of the screen, and information on whether the vehicle is currently being operated is displayed. Next, a shot number display field 62 is always displayed on the left side of the screen. The shot number display field 62 displays the number of produced shots, the number of defective shots, and the like from the start of operation of the injection molding machine 10.

A main display field 64 is provided in the center of the injection molding machine screen 60. A plurality of tabs 64a, 64b, ... are provided in the main display field 64. The tabs 64a, 64b, ... respectively contain information such as "main specifications", "measurement values", and "history", which are display type names that indicate the display mode. When the "main specifications" tab 64a is selected, the display mode is switched and displayed as shown in FIG. 4A. In the main display field 64, an injection molding machine schematic diagram 67 is shown, along with data on product specifications, that is, main specifications of the injection molding machine 10 (see FIG. 1), such as a screw diameter, injection pressure, for example.

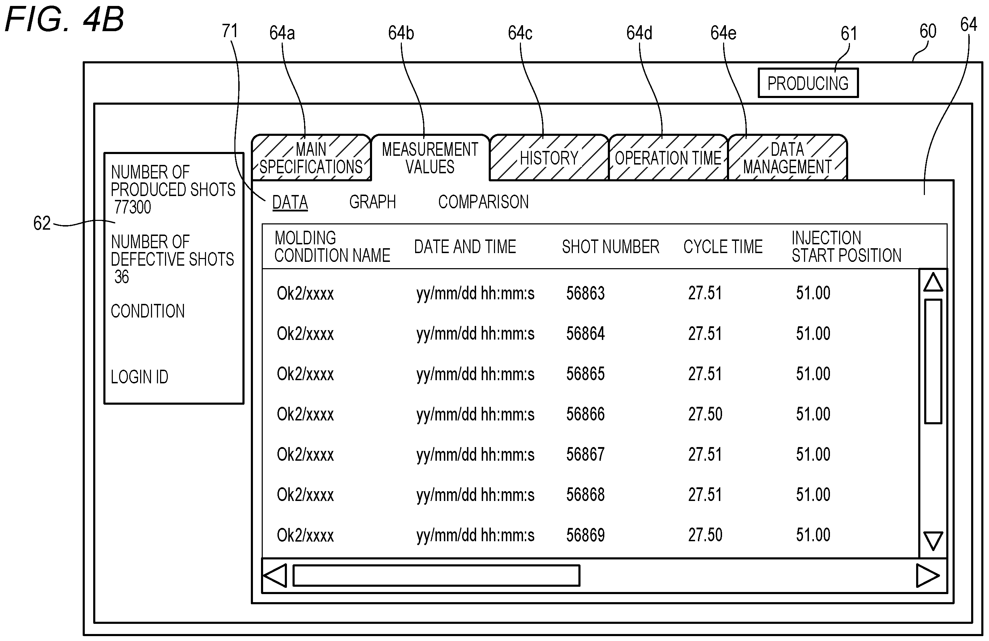

When the "measurement values" tab 64b is selected in the main display field 64 in the injection molding machine screen 60, the display mode is switched, and a screen shown in FIG. 4B is displayed. At this time, a sub display mode selection field 71 for selecting any one of "data", "graph", and "comparison" which are three types of sub display modes is displayed in an upper portion of the main display field 64. Initially, "data" is selected, and the screen is displayed in a data display mode in which measurement data and the like are displayed, as shown in FIG. 4B. In the data display mode, setting data set in the injection molding machine 10, various measurement data obtained by measuring, and the like are displayed for each shot number in the main display field 64.

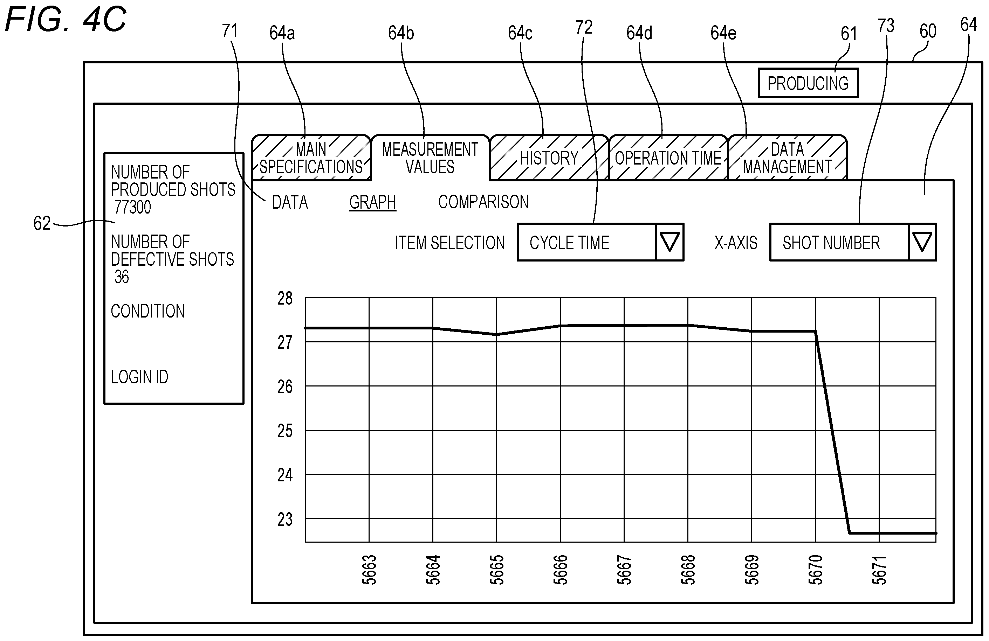

When "graph" is selected in the sub display mode selection field 71, a graph display mode is displayed as shown in FIG. 4C. When data to be displayed in a graph is selected by an item selection pull-down menu 72 and the X-axis of the graph is selected by an X-axis selection pull-down menu 73, the selected data is displayed in the graph. When "comparison" is selected in the sub display mode selection field 71, data for different shot numbers can be compared.

### {Work Input Screen}

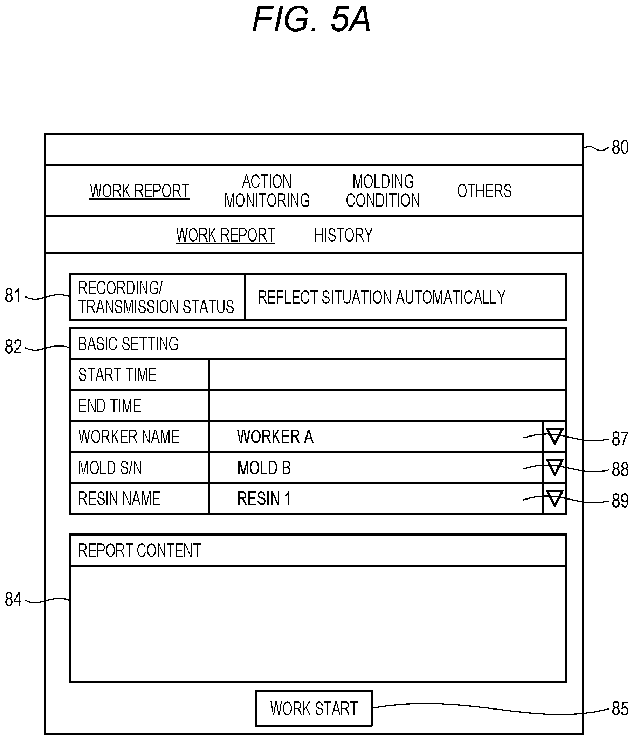

The screen AP group 8 included in the processing software 6 of the operation state management system 1 (see FIG. 1) according to the present illustrative embodiment also includes a screen to be displayed on the monitor 14a by operating the monitor 14a of the controller 14 (see FIG. 2) of each of the injection molding machines 10, 10, ... Specifically, the work input screen 80 shown in FIG. 5A. The work input screen 80 is a screen that enables an operator to easily create a work report regarding work performed by the injection molding machine 10. The operator who performs the work in the injection molding machine 10 requests connection to the operation state management system 1 on the monitor 14a before starting work, and performs a predetermined operation. Then, the work input screen 80 is displayed on the monitor 14a.

The work input screen 80 includes a state display field 81, a basic setting field 82, a report content input field 84, and a work start button 85. The state display field 81 indicates an execution state of the work input screen. Basic items in a work report are set in the basic setting field 82. The basic setting field 82 includes a worker selection pull-down menu 87, a mold selection pull-down menu 88, and a resin selection pull-down menu 89. Before starting the work, the operator selects his or her name, the mold to be used, and the resin to be used from the pull-down menus 87, 88, and 89. Next, the work start button 85 is selected.

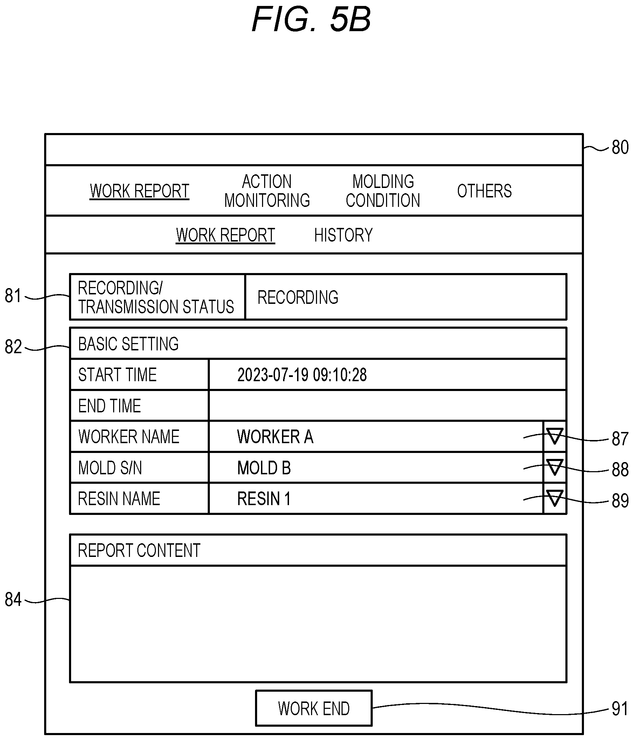

Then, the work input screen 80 is displayed as shown in FIG. 5B. The name of the operator, the mold to be used, and the resin to be used are stored in the database 7 of the operation state management system 1 (see FIG. 1). Then, on the work input screen 80, "recording" is displayed in the state display field 81, and a start time is displayed in the basic setting field 82. Further, the work start button 85 (see FIG. 5A) changes into a work end button 91.

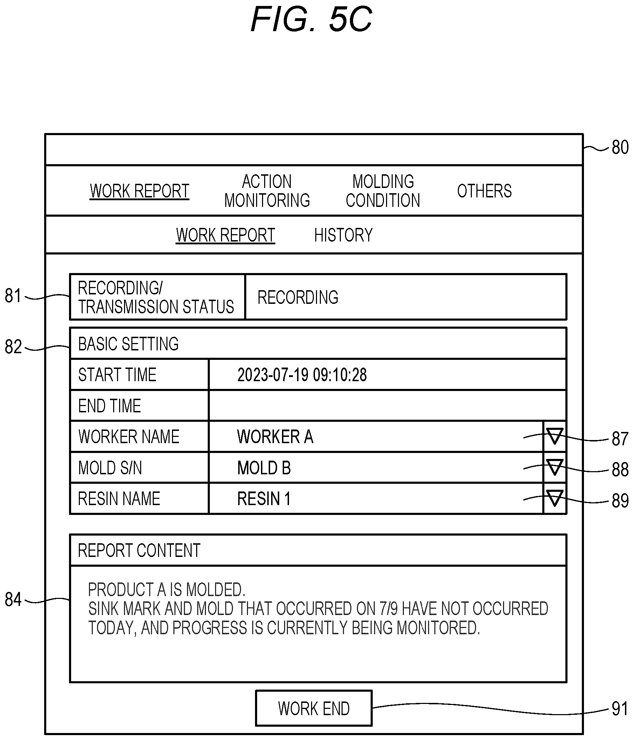

Thereafter, the operator starts the work in the injection molding machine 10 (see FIG. 1). If there is anything to report regarding the work, the operator inputs it to the report content input field 84. FIG. 5C shown a state in which report contents are input to the report content input field 84. When the operator has finished the work in the injection molding machine 10 (see FIG. 1), the work end button 91 is selected. Then, an end time is set in the basic setting field 82. The end time is stored in the database 7 of the operation state management system 1 (see FIG. 1) together with the report contents. That is, the end time and the report contents are stored in the database 7 as a work record. The work input screen 80 allows an operator to directly operate the injection molding machine 10 in working to create a work record, so that not only can the creation of a work record be made easier, but forgetting to create a work record can also be prevented.

### {Work Report Screen}

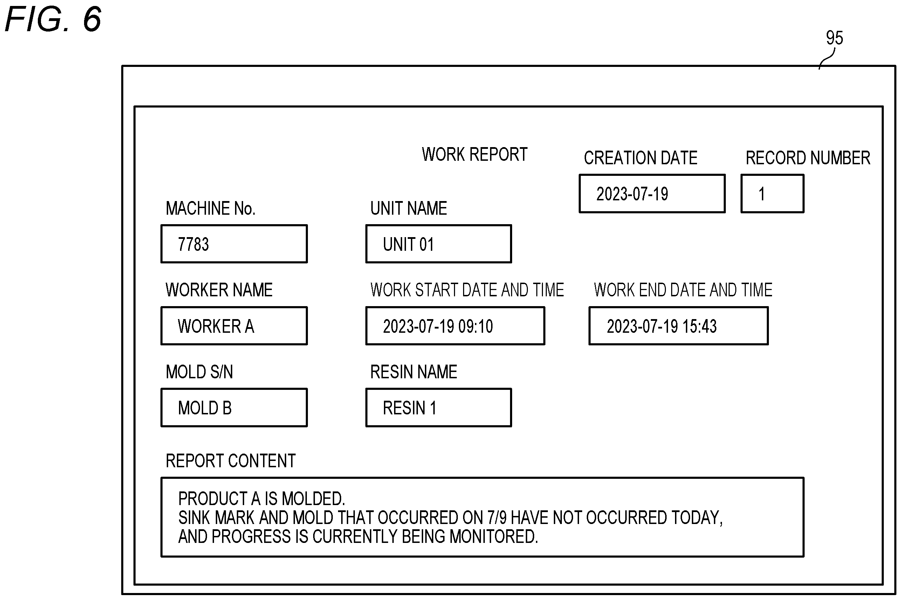

The work record transmitted from the injection molding machine 10 (see FIG. 1) to the operation state management system 1 and stored in the database 7 can be viewed by calling up a work report screen 95 shown in FIG. 6 from the terminals 3, 4, ... The work report screen displays detailed contents of the work record. That is, information on the injection molding machine 10 (see FIG. 1) that the operator worked on, a name of the operator, a work start date and time, a work end date and time, the mold, the resin, and the report contents are displayed. The work record displayed in the work report can also be printed.

### Modification to Illustrative Embodiments

### {Operation State Management Screen}

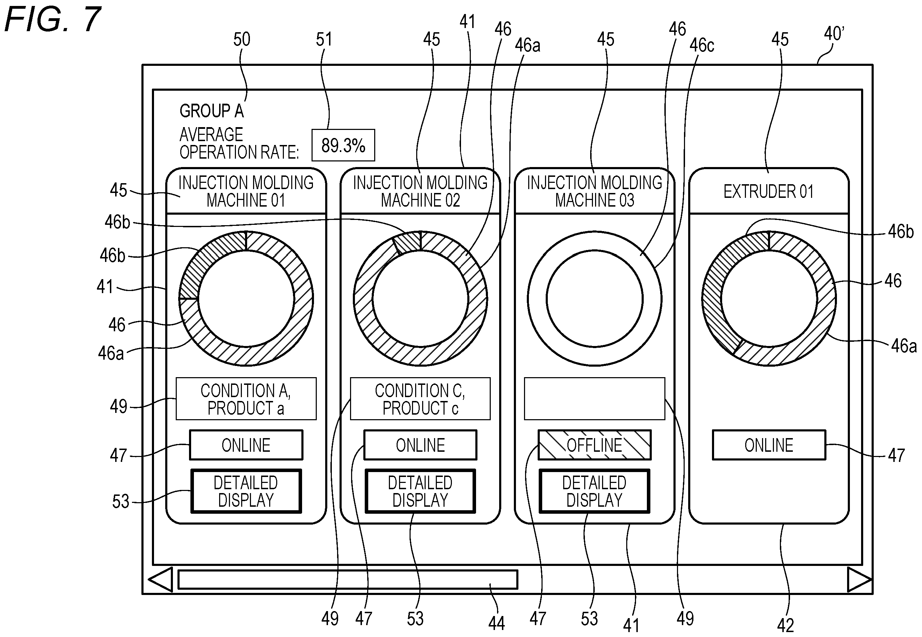

The present illustrative embodiment can be variously modified. For example, the operation state management screen 40 may be modified. FIG. 7 shows an operation state management screen 40' according to a modification of the present illustrative embodiment. The operation state management screen 40' displays not only the injection molding machines 10, 10, ... (see FIG. 1), but also an operation state of the extruder 11. That is, the operation state management screen 40' displays not only the injection molding machine cards 41, 41, ... but also an extruder card 42.

In the extruder card 42, similarly to the injection molding machine cards 41, 41, ..., an identification name of an extruder, which is the industrial machine identification name 45, for example, "extruder 01" is displayed, the pie chart 46 indicating an operating ratio is shown, and the operation state display field 47 indicating an operation state is displayed. However, unlike the injection molding machine cards 41, 41, ..., the extruder card 42 does not include the molding condition identification name display field 49, nor is the detail display button 53 provided.

As described above, the operation state management screen 40' according to the modification can display cards 41, 42, ... indicating the operation states of not only the injection molding machines 10, 10, ... but also the extruder 11, thereby enabling the operation states to be managed. However, similar cards 41, 42, ... can be prepared for other types of industrial machines, for example, a pressing machine, an NC machine tool, and displayed on the operation state management screen 40'. In other words, three or more types of industrial machines 10, 11, ... can be displayed together on the operation state management screen 40'.

Although the invention made by the present inventor has been specifically described above based on the illustrative embodiments, it is needless to say that the present invention is not limited to the illustrative embodiments described above, and various modifications can be made without departing from the scope of the invention. The plurality of examples described above may be appropriately combined.

## Claims

1. An operation state management system comprising:
one or a plurality of servers configured to manage operation states of a plurality of industrial machines; and
one or a plurality of terminals configured to communicate with the server,
wherein information on the operation states of the plurality of industrial machines is periodically transmitted to the server and stored,
wherein the server includes an operation state management screen displayed on the terminal in response to a call from the terminal, and
wherein a plurality of cards corresponding to each of the plurality of industrial machines are displayed on the operation state management screen, and each of the cards displays an industrial machine identification name, an operation rate, and a current operation state of the corresponding industrial machine.

2. The operation state management system according to claim 1, wherein the industrial machine is an injection molding machine.

3. The operation state management system according to claim 2,
wherein a molding condition identification name for a molding condition set in the injection molding machine is transmitted to the server and is stored in the server, and
wherein the molding condition identification name is displayed on the cards of the operation state management screen.

4. The operation state management system according to claim 2 or 3,
wherein measurement data of the injection molding machine is periodically transmitted to the server and is stored in the server,
wherein the server includes an injection molding machine screen, and
wherein in a state where the operation state management screen is displayed on the terminal, in a case where one of the cards is selected by a screen operation, the injection molding machine screen is displayed on the terminal, and the measurement data for the injection molding machine corresponding to the selected card is displayed.

5. The operation state management system according to claim 4, wherein the injection molding machine screen includes a data display mode that displays the measurement data in a history for each shot of a molding cycle.

6. The operation state management system according to claim 4,
wherein a controller of the injection molding machine includes a work input screen that is displayed and operated on an attached monitor,
wherein the work input screen is configured to receive input of work performed by a user on the injection molding machine as a work record, and
wherein the work record input on the work input screen is transmitted to the server and is stored in the server.

7. The operation state management system according to claim 6,
wherein the server includes a work report screen, which is displayed on the terminal in response to a call from the terminal, and
wherein the work record is displayed on the work report screen.
